# FASCICULE DE BREVET EUROPEEN

(11) **EP 1 550 601 B1**
(45) Date de publication et mention de la délivrance du brevet: **14.11.2007**
(21) Numéro de dépôt: 04293012.3
(22) Date de dépôt: 16.12.2004
(51) Int. Cl.: B62D 25/14, F41H 7/04

(54) **Cloison pare-feu**
Stirnwand
Firewall

(30) Priorité: 31.12.2003 FR 0315602
(43) Date de publication de la demande: 06.07.2005
(73) Titulaire: NEXTER Systems, 42328 Roanne (FR)
(72) Inventeur: Jacquemont, Jacky, 91430 Igny (FR); Poirmeur, Xavier, 78280 Guyancourt (FR); Colin, Bruno, 78280 Guyancourt (FR)
(74) Mandataire: Célanie, Christian

(56) Documents cités:
- WO-A-99/15238
- WO-A-20/04033274
- GB-A- 2 341 353

## Description

La présente invention concerne une cloison pare-feu présentant, en plus de ses caractéristiques thermiques, de bonnes caractéristiques d'atténuation acoustique et des caractéristiques de protection balistique.

Il est connu dans le domaine des cloisons pare-feu d'utiliser des cloisons constituées d'une plaque métallique, typiquement en aluminium, d'épaisseur moyenne (de l'ordre de 10 mm). De telles cloisons présentent l'inconvénient, si elles offrent une bonne protection anti-feu, d'être très perméable aux bruits, vibrations et autres nuisances sonores. De plus, la nécessaire épaisseur d'une telle cloison mono plaque, conduit à des masses importantes.

La présente invention est bâtie autour d'un concept de double plaque afin de répondre à ces différents inconvénients. L'invention est plus particulièrement destinée à être utilisée dans les véhicules, par exemple pour séparer le compartiment moteur de l'habitacle.

Un exemple de cette technique antérieure est divulgué par GB 2341353

Par ailleurs, dans le cas des véhicules blindés, il est nécessaire de prévoir une étanchéité parfaite entre le compartiment moteur et l'habitacle alors que parallèlement il peut être nécessaire de faire évoluer facilement les protections thermiques et/ou acoustiques et/ou balistiques mises en oeuvre entre le compartiment moteur et l'habitacle (pour tenir compte par exemple de nouvelles contraintes d'intégration d'équipements ou de nouvelles exigences).

C'est le but de l'invention que de proposer une cloison pare feu permettant d'assurer avec une masse réduite une protection acoustique et thermique améliorée tout en autorisant une évolutivité ultérieure de la protection, sans imposer une redéfinition complète du compartiment moteur ou de l'habitacle.

L'invention a pour objet une cloison pare-feu séparant un compartiment chaud d'un compartiment froid, comprenant un cadre périphérique et une première plaque métallique d'obstruction fixée sur un premier côté dudit cadre périphérique, caractérisée en ce que la première plaque d'obstruction est placée du côté du compartiment chaud et est fixée de façon étanche sur le cadre périphérique, et en ce qu'elle comprend une seconde plaque métallique d'obstruction fixée sur un second côté dudit cadre périphérique, du côté du compartiment froid, parallèlement à la première plaque, la seconde plaque étant fixée sur le cadre périphérique par des moyens de fixation démontables, le cadre périphérique étant intercalé entre les deux plaques d'obstruction de manière à ménager un volume libre entre ces deux plaques.

Selon une caractéristique de l'invention, la cloison pare-feu ne comporte aucune traversée sur les première et seconde plaques d'obstruction.

Selon une autre caractéristique de l'invention, un vide partiel est établi dans le volume libre entre les deux plaques d'obstruction.

Selon une autre caractéristique de l'invention, le cadre périphérique est en aluminium et présente une épaisseur de 16 mm environ.

Selon une autre caractéristique de l'invention, la première plaque d'obstruction est en aluminium.

Selon une autre caractéristique de l'invention, la première plaque est soudée sur le cadre périphérique.

Selon une autre caractéristique de l'invention, la première plaque d'obstruction présente une épaisseur de 8 mm environ.

Selon une autre caractéristique de l'invention, la seconde plaque d'obstruction est en aluminium ou en acier.

Selon une autre caractéristique de l'invention, la seconde plaque d'obstruction présente une épaisseur inférieure à 10 mm environ.

Selon une autre caractéristique de l'invention, la cloison pare-feu comprend un absorbant acoustique placé entre les deux plaques, l'absorbant acoustique pouvant être constitué d'un matériau poreux.

Selon une autre caractéristique de l'invention, l'absorbant acoustique présente une conductivité thermique inférieure à 0,034 W/(m.°K) et une épaisseur supérieure à 10 mm environ.

Avantageusement, l'absorbant acoustique est de la laine de roche.

Selon encore une caractéristique de l'invention, la première plaque d'obstruction est recouverte d'un premier moyen amortissant sur sa face interne en regard de la seconde plaque d'obstruction.

Selon encore une caractéristique de l'invention, le premier moyen amortissant comprend une couche de colle araldite et une première plaque de cisaillement, ladite couche de colle s'intercalant entre la première plaque de cisaillement et la première plaque d'obstruction.

Avantageusement, la couche de colle araldite présente une épaisseur de 1 mm environ et en ce que la première plaque de cisaillement est en acier et présente une épaisseur de 2 mm environ.

Selon encore une caractéristique de l'invention, la seconde plaque d'obstruction est recouverte d'un second moyen amortissant sur sa face interne, en regard de la première plaque d'obstruction.

Avantageusement, le second moyen amortissant comprend une couche d'élastomère et une seconde plaque de cisaillement, ladite couche d'élastomère s'intercalant entre la seconde plaque de cisaillement et la seconde plaque d'obstruction.

Avantageusement encore, la couche d'élastomère présente une épaisseur de 1 mm environ et en ce que la seconde plaque de cisaillement est en acier et présente une épaisseur de 1 mm environ.

Selon une autre caractéristique avantageuse, la cloison pare-feu selon l'invention comporte une couche libre d'air, d'au moins 1 mm d'épaisseur environ entre l'absorbant acoustique et le premier moyen amortissant ou entre l'absorbant acoustique et le second moyen amortissant.

Un avantage de la cloison pare-feu selon l'invention est d'offrir des caractéristiques thermiques renforcées.

Un autre avantage de la cloison pare-feu selon l'invention est d'offrir d'excellentes caractéristiques d'atténuation acoustique.

Un autre avantage de la cloison pare-feu selon l'invention est de présenter de bonnes caractéristiques de protection balistique, notamment du côté de l'habitacle.

Un autre avantage de la cloison pare-feu selon l'invention est de garantir une étanchéité totale, garante d'une protection NBC (Nucléaire, Biologique, Chimique).

Un autre avantage de la cloison pare-feu selon l'invention est de combiner ces différentes caractéristiques, en présentant une épaisseur et une masse finale faible.

D'autres caractéristiques, détails et avantages de l'invention ressortiront plus clairement de la description détaillée donnée ci-après à titre indicatif en relation avec des dessins sur lesquels :
- la figure 1 est une vue en coupe d'une cloison dans son environnement d'utilisation,
- la figure 2 présente en vue coupée un premier mode de réalisation,
- la figure 3 présente en vue coupée un second mode de réalisation, et
- la figure 4 présente en vue coupée un troisième mode de réalisation.

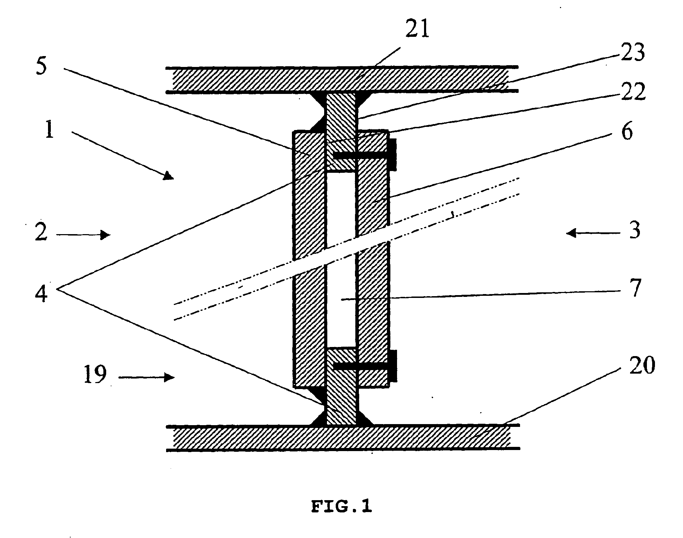

Sur la figure 1 est représentée une cloison 1 selon l'invention. Cette cloison vient obturer un passage 19 délimité par un plancher 20 et un plafond 21. Cette cloison 1 sépare un compartiment chaud 2 d'un compartiment froid 3. Dans un cas d'utilisation typique, le compartiment chaud est le compartiment moteur d'un véhicule ou équivalent. Ce compartiment peut présenter des températures s'élevant jusqu'à 70 ou 100 °C. Dans des situations extrêmes, ce compartiment peut aussi être le siège d'un incendie. Le compartiment froid est, typiquement, un habitacle destiné à accueillir des personnels (pilotes, servants,...) qu'il convient de protéger des nuisances du compartiment chaud. Il convient, malgré les conditions de température extrêmes présentes dans le compartiment chaud, que la température du compartiment froid ne dépasse pas une température de confort du personnel de 40 °C. De plus, le moteur ou d'autres équipements présents dans le même compartiment sont générateurs de bruits, de vibrations, dont il convient de limiter au maximum la transmission vers l'habitacle. Dans le cas particulier des véhicules de combat, il convient d'assurer en sus une protection des personnels contre les éventuelles agressions balistiques. La cloison étant interne au véhicule, elle n'est généralement pas directement soumise aux agressions. Cependant, elle peut avoir à subir des agressions induites par la dégradation d'autres équipements ayant préalablement subis ces agressions. La cloison doit être telle qu'elle n'ajoute pas de par sa conception de nouveaux dangers balistiques, et le cas échéant être complétée par des moyens spécifiquement prévus pour assurer cette protection.

La cloison 1 comprend un cadre périphérique 4, dont les contours épousent le plancher 20 et le plafond 21. De manière analogue, bien que non représentés, les contours du cadre périphérique 4 épousent des plaques situées de part et d'autre reliant le plancher 20 au plafond 21. La cloison 1 assure une obturation totale du passage 19. Pour cela, les contours du cadre 4 sont avantageusement soudés sur le plancher 20, les plaques latérales et le plafond 21. Le cadre périphérique 4 est de préférence métallique. Il est avantageusement constitué du même matériau que le plancher 20, le plafond 21 et les plaques, afin de simplifier l'opération de soudure indiquée ci-dessus. Sur un premier côté 22 du cadre périphérique 4, on fixe une première plaque 5 d'obstruction qui vient totalement obturer le passage. Sur un second côté 23 du cadre 4, opposé au premier côté 22, on fixe une seconde plaque 6 d'obstruction. Le cadre 4 présente une épaisseur constante. Avantageusement, cette épaisseur est d'environ 16 mm. La seconde plaque 6 d'obstruction est ainsi sensiblement parallèle à la première plaque 5 d'obstruction. La seconde plaque 6 obture elle aussi totalement le passage 19. Cet arrangement est tel, qu'il ménage, à l'intérieur du cadre 4, un volume d'air libre 7 entre les deux plaques 5 et 6. Dans ce volume libre 7, on peut avantageusement réaliser un vide plus ou moins poussé. Les dimensions de la cloison sont telles qu'elles s'adaptent à celles du passage 19. La cloison 1 est ainsi représentée interrompue sur la figure 1. Il en de même des modes de réalisation des autres figures, même si l'interruption n'est plus représentée pour alléger la figure.

Afin d'assurer une étanchéité parfaite entre les deux compartiments 2 et 3, garante de la protection NBC des personnels, la soudure du cadre 4 sur le plancher 20, sur le plafond 21 et sur les parois latérales est complétée par une soudure, d'au moins une des plaques 5 ou 6 d'obstruction, sur le cadre périphérique 4.

On préférera souder la plaque 5 disposée du côté du compartiment moteur 2. Ainsi, le démontage de la cloison 1 sera possible du côté habitacle pour faire évoluer la protection. Il est bien entendu possible de prévoir un autre moyen d'étanchéité que la soudure entre la plaque 5 et le cadre 4, par exemple une fixation par vis avec interposition de joints d'étanchéité ou bien un collage.

Les deux plaques 5 et 6 sont avantageusement métalliques. Elles peuvent être typiquement en aluminium afin de conserver une masse réduite. Cependant, tout autre matériau métallique peut être utilisé, par exemple l'acier. Le choix de l'aluminium, matériau identique à celui du cadre périphérique 4, facilite la soudure entre ledit cadre 4 et la plaque 5 ou 6. Avantageusement, la première plaque 5 située du côté du compartiment chaud 2 est soudée. Avantageusement encore, son épaisseur est d'environ 8 mm. L'autre plaque 6 d'obstruction peut être soudée ou vissée sur le cadre périphérique 4. Avantageusement, la seconde plaque 6, située du côté du compartiment froid 3 (habitacle), sera fixée par un moyen de fixation démontable, par exemple par des vis. Cette plaque 6 est en aluminium et présente une épaisseur inférieure à 10 mm. Ceci permet de diminuer les risques de création d'éclats, potentiellement vulnérants pour les personnels en cas d'agression balistique. Avantageusement, cette épaisseur est prise égale à 6 mm environ. Alternativement, cette plaque n'étant pas soudée au cadre peut être en acier.

Conformément à une autre caractéristique de l'invention les première et seconde plaques d'obstruction sont dépourvues de traversées (passage de fils ou de tiges de transmission). Une telle disposition permet d'améliorer l'isolation acoustique. En effet, une traversée entre les deux plaques aurait pour effet d'assurer une liaison mécanique entre ces dernières, pénalisant les performances acoustiques de la cloison. Ceci est d'autant plus important quand on utilise comme le propose l'invention des plaques en aluminium d'épaisseur faible (inférieure ou égale à 10 mm) et ayant des modes élastiques de basse fréquence (dans la bande 0 à 100 Hz).

Les traversées nécessaires entre les deux compartiments seront réalisées au niveau du cadre périphérique 4, donc en dehors des plaques d'obstruction et sans nuire à leur efficacité acoustique.

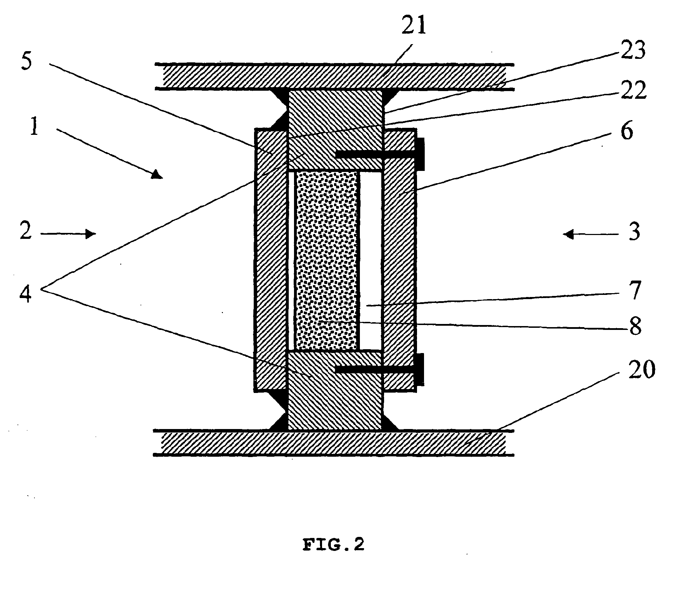

La figure 2 illustre une autre variante d'un mode de réalisation particulier selon la présente invention. Le volume d'air libre 7 ou de vide, ménagé entre les deux plaques 5 et 6 d'obstruction offre une certaine isolation acoustique. Un mode de réalisation avantageux consiste à remplacer tout ou partie de ce volume d'air 7 par un absorbant acoustique 8. Cet absorbant acoustique 8 est disposé en une couche parallèle aux plaques 5 et 6 d'obstruction et occupant toute la surface délimitée par l'intérieur du cadre 4. Il est préférentiellement constitué d'un matériau poreux. Avantageusement, cet absorbant acoustique 8 contribue à l'isolation thermique et présente une conductivité thermique inférieure à 0,034 W/(m.°K). Avantageusement, son épaisseur est au moins égale à 10 mm. Avantageusement encore, cet absorbant est de la laine de roche.

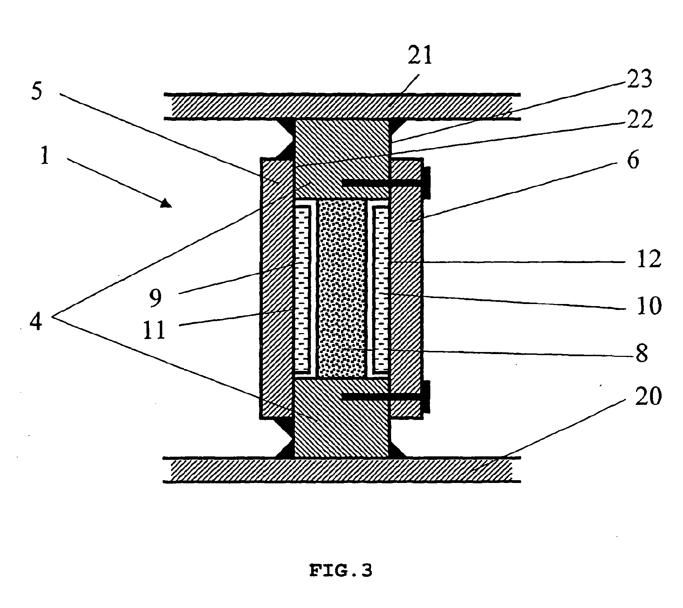

La figure 3 illustre un autre mode de réalisation selon l'invention. Dans ce mode de réalisation, la cloison est complétée par l'ajout d'un premier moyen amortissant 9 et le cas échéant, d'un second moyen amortissant 10. Comme il apparaît sur la figure 3, l'une des plaques d'obstruction ou bien les deux plaques 5 et 6 sont doublées respectivement par un premier 9 moyen amortissant et un second 10 moyen amortissant. Ces moyens amortissant 9 et 10 sont constitués par une couche d'un matériau viscoélastique.

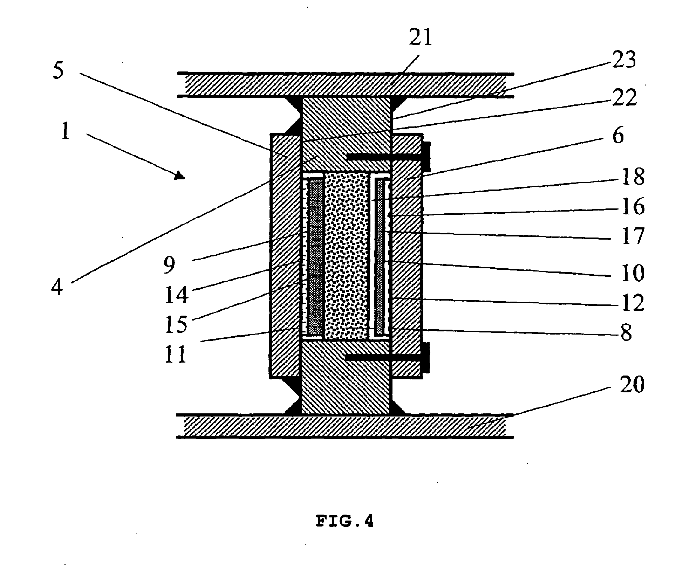

La figure 4 illustre un autre mode de réalisation selon l'invention. Dans ce mode de réalisation, les premier et second moyens amortissant 9 et 10 sont constitués de deux couches. Une première couche 14 ou 16 d'un matériau viscoélastique est placée contre la plaque 5 d'obstruction sur la face interne 11 ou contre la plaque 6 d'obstruction sur la face interne 12. Cette première couche 14 ou 16 est doublée d'une plaque de cisaillement 15 ou 17. Cette plaque de cisaillement 15 ou 17, avantageusement en acier, participe de l'amortissement vibratoire en coopérant avec la couche viscoélastique 14 ou 16. Elle constitue de plus une protection contre les agressions balistiques. Cette plaque de cisaillement présente avantageusement une épaisseur de 1 ou 2 mm environ. Dans un mode de réalisation illustratif, le premier moyen amortissant 9, disposé sur la première plaque 5 d'obstruction, comprend une couche 14 de colle araldite, avantageusement d'épaisseur 1 mm environ, sur laquelle est disposée la première plaque de cisaillement 15, en acier, avantageusement d'épaisseur 2 mm environ. Avantageusement, la colle araldite est du type AV144 qui présente de bonnes caractéristiques acoustiques à température élevée (80 °C). De manière alternative ou combinée, le second moyen amortissant 10, disposé sur la seconde plaque 6 d'obstruction, comprend une couche 15 d'élastomère, avantageusement d'épaisseur 1 mm environ, sur laquelle est disposée une seconde plaque de cisaillement 17, en acier, avantageusement d'épaisseur 1 mm environ. Ce matériau élastomère est avantageusement constitué d'un produit vendu sous la dénomination commerciale SMACTANE et plus particulièrement de SMACTANE 50. Le dépôt de la couche de matériau viscoélastique 14 ou 16 (araldite, élastomère ou équivalent) peut s'effectuer soit sur la plaque 5 ou 6 correspondante, déjà fixée dans la cloison 1, elle-même, le cas échéant, montée dans le véhicule. Cette plaque 5 ou 6 d'obstruction est alors rendue accessible par exemple en démontant l'autre plaque 6 ou 5 en regard. Ce même dépôt de la couche viscoélastique peut aussi être réalisé en atelier sur la plaque 5 ou 6 d'obstruction. Cette plaque 5 ou 6 est ultérieurement fixée sur le cadre 4 ensemble avec la couche viscoélastique 14 ou 16 et le cas échéant la plaque de cisaillement 15 ou 17.

Comme le montre la figure 4, une couche d'air ou de vide 18 est avantageusement ménagée dans la cloison 1, entre l'absorbant acoustique 8 et le premier moyen amortissant 9. Alternativement, selon un mode de réalisation non représenté, cette couche d'air 18 peut être ménagée entre l'absorbant acoustique 8 et le second moyen amortissant 10. Cette couche d'air 18 présente avantageusement une épaisseur de 1 mm environ.

## Revendications

1. Cloison pare-feu (1) séparant un compartiment chaud (2) d'un compartiment froid (3), comprenant un cadre périphérique (4) et une première plaque (5) métallique d'obstruction fixée sur un premier côté (22) dudit cadre périphérique (4), **caractérisée en ce que** la première plaque (5) d'obstruction est placée du côté du compartiment chaud (2) et est fixée de façon étanche sur le cadre périphérique (4), et **en ce qu'**elle comprend une seconde plaque (6) métallique d'obstruction fixée sur un second côté (23) dudit cadre périphérique (4), du côté du compartiment froid (3), parallèlement à la première plaque (5), la seconde plaque (5) étant fixée sur le cadre périphérique (4) par des moyens de fixation démontables, le cadre périphérique (4) étant intercalé entre les deux plaques (5, 6) d'obstruction de manière à ménager un volume (7) libre entre ces deux plaques (5, 6).

2. Cloison pare-feu (1) selon la revendication 1, **caractérisé en ce qu**'elle ne comporte aucune traversée sur les première (5) et seconde (6) plaques d'obstruction.

3. Cloison pare-feu (1) selon la revendication 1 ou 2, **caractérisé en ce qu'**un vide partiel est établi dans le volume libre (7) entre les deux plaques d'obstruction (5, 6).

4. Cloison pare-feu (1) selon une des revendications 1 à 3, **caractérisée en ce que** le cadre périphérique (4) est en aluminium et présente une épaisseur de 16 mm environ.

5. Cloison pare-feu (1) selon l'une quelconque des revendications 1 à 4, **caractérisée en ce que** la première plaque (5) d'obstruction est en aluminium.

6. Cloison pare-feu (1) selon la revendication 5, **caractérisée en ce qu**e la première plaque (5) est soudée sur le cadre périphérique (4).

7. Cloison pare-feu (1) selon l'une quelconque des revendications 1 à 6, **caractérisée en ce que** la première plaque (5) d'obstruction présente une épaisseur de 8 mm environ.

8. Cloison pare-feu (1) selon l'une quelconque des revendication 1 à 7, **caractérisée en ce que** la seconde plaque (6) d'obstruction est en aluminium ou en acier.

9. Cloison pare-feu (1) selon la revendication 8, **caractérisée en ce que** la seconde plaque (6) d'obstruction présente une épaisseur inférieure à 10 mm environ.

10. Cloison pare-feu (1) selon l'une quelconque des revendications 1 à 9, **caractérisée en ce qu**'elle comprend un absorbant acoustique (8) placé entre les deux plaques (5, 6).

11. Cloison pare-feu (1) selon la revendication 10, **caractérisée en ce que** l'absorbant acoustique (8) est constitué d'un matériau poreux.

12. Cloison pare-feu (1) selon la revendication 10 ou 11, **caractérisée en ce que** l'absorbant acoustique (8) présente une conductivité thermique inférieure à 0,034 W/ (m.°K) et une épaisseur supérieure à 10 mm environ.

13. Cloison pare-feu (1) selon l'une quelconque des revendications 10 à 12, **caractérisée en ce que** l'absorbant acoustique (8) est de la laine de roche.

14. Cloison pare-feu (1) selon l'une quelconque des revendications 1 à 13, **caractérisée en ce que** la première plaque (5) d'obstruction est recouverte d'un premier moyen amortissant (9) sur sa face interne (11) en regard de la seconde plaque (6) d'obstruction.

15. Cloison pare-feu (1) selon la revendication 14, **caractérisée en ce que** le premier moyen amortissant (9) comprend une couche (14) de colle araldite et une première plaque (15) de cisaillement, ladite couche (14) de colle s'intercalant entre la première plaque (15) de cisaillement et la première plaque (5) d'obstruction.

16. Cloison pare-feu (1) selon la revendication 15, **caractérisée en ce que** la couche (14) de colle araldite présente une épaisseur de 1 mm environ et **en ce que** la première plaque (15) de cisaillement est en acier et présente une épaisseur de 2 mm environ.

17. Cloison pare-feu (1) selon l'une quelconque des revendications 1 à 16, **caractérisée en ce que** la seconde plaque (6) d'obstruction est recouverte d'un second moyen amortissant (10) sur sa face interne (12), en regard de la première plaque (5) d'obstruction.

18. Cloison pare-feu (1) selon la revendication 17, **caractérisée en ce que** le second moyen amortissant (10) comprend une couche (16) d'élastomère et une seconde plaque (17) de cisaillement, ladite couche (16) d'élastomère s'intercalant entre la seconde plaque (17) de cisaillement et la seconde plaque (6) d'obstruction.

19. Cloison pare-feu (1) selon la revendication 18, **caractérisée en ce que** la couche (16) d'élastomère présente une épaisseur de 1 mm environ et **en ce que** la seconde plaque (17) de cisaillement est en acier et présente une épaisseur de 1 mm environ.

20. Cloison pare-feu (1) selon l'une quelconque des revendications précédentes, **caractérisée en ce qu**'elle comporte une couche d'air (18) ou de vide (18), d'au moins 1 mm d'épaisseur environ, entre l'absorbant acoustique (8) et le premier moyen amortissant (9) ou entre l'absorbant acoustique (8) et le second moyen amortissant (10).

## Claims

1. A fire wall (1) separating a hot compartment (2) from a cold compartment (3), comprising a peripheral frame (4) and a first metallic obstruction plate (5) fastened onto a first side (22) of said peripheral frame (4), **characterised in that** the first obstruction plate (5) is placed towards the hot compartment (2) and is fastened and sealed onto the peripheral frame (4), and **in that** it comprises a second metallic obstruction plate (6) fastened onto a second side (23) of said peripheral frame (4), towards the cold compartment (3) and parallel to the first plate (5), the second plate (5) being fastened to the peripheral frame (4) by removable fastening means, the peripheral frame (4) being positioned between the two obstruction plates (5, 6) so as to leave a volume (7) between the two plates (5, 6).

2. A fire wall (1) according to Claim 1, **characterised in that** it does not incorporate any cross pieces on the first (5) and second (6) obstruction plates.

3. A fire wall (1) according to Claims 1 or 2, **characterised in that** a partial vacuum is made in the volume (7) between the two obstruction plates (5, 6)..

4. A fire wall (1) according to one of Claims 1 to 3, **characterised in that** the peripheral frame (4) is made of aluminium and is of a thickness of around 16 mm.

5. A fire wall (1) according to any one of Claims 1 to 4, **characterised in that** the first obstruction plate (5) is made of aluminium.

6. A fire wall (1) according to Claim 5, **characterised in that** the first plate (5) is welded onto the peripheral frame (4).

7. A fire wall (1) according to any one of Claims 1 to 6, **characterised in that** the first obstruction plate (5) is of a thickness of around 8 mm.

8. A fire wall (1) according to any one of Claims 1 to 7, **characterised in that** the second (6) obstruction plate is made of aluminium or steel.

9. A fire wall (1) according to Claim 8, **characterised in that** the second obstruction plate (6) is of a thickness of less than approximately 10 mm.

10. A fire wall (1) according to any one of Claims 1 to 9, **characterised in that** it comprises an acoustical absorbent (8) placed between the two plates (5, 6).

11. A fire wall (1) according to Claim 10, **characterised in that** the acoustical absorbent (8) is constituted by a porous material.

12. A fire wall (1) according to Claims 10 or 11, **characterised in that** the acoustical 8 absorbent has thermal conductivity of less than 0.034 W/(m.°K) and a thickness of over approximately 10 mm.

13. A fire wall (1) according to any one of Claims 10 to 12, **characterised in that** the acoustical absorbent (8) is made of rock wool.

14. A fire wall (1) according to any one of Claims 1 to 13, **characterised in that** the first obstruction plate (5) is coated with a first damping means (9) on its inner face (11), facing the second obstruction plate (6).

15. A fire wall (1) according to Claim 14, **characterised in that** the first damping means (9) comprise a layer (14) of araldite glue and a first shearing plate (15), said layer of glue being positioned between the first shearing plate (15) and the first obstruction plate (5).

16. A fire wall (1) according to Claim 15, **characterised in that** the layer (14) of araldite glue is of a thickness of around 1 mm and the first shearing plate (15) is made of steel and is of a thickness of around 2 mm.

17. A fire wall (1) according to any one of Claims 1 to 16, **characterised in that** the second obstruction plate (6) is coated with a second damping means (10) on its inner face (12), facing the first obstruction plate (5).

18. A fire wall (1) according to Claim 17, **characterised in that** the second damping means (10) comprise a layer (16) of elastomer and a second shearing plate (17), said layer (16) of elastomer positioned between the second shearing plate (17) and the second obstruction plate (6).

19. A fire wall (1) according to Claim 18, **characterised in that** the layer (16) of elastomer is of a thickness of around 1 mm and wherein the second shearing plate (17) is made of steel and is of a thickness of around 1 mm.

20. A fire wall (1) according to any one of the above Claims, **characterised in that** it incorporates an airless or vacuum layer (18), of a thickness of at least approximately 1 mm, between the acoustic absorbent (8) and the first damping means (9) or between the acoustic absorbent (8) and the second damping means (10).

## Patentansprüche

1. Feuerwehrende Trennwand (1), die einen heißen Raum (2) von einem kalten Raum (3) trennt, umfassend einen peripherischen Rahmen (4) und eine erste Metallplatte (5) zum Versperren, die an einer ersten Seite (22) des genannten peripherischen Rahmens (4) befestigt ist, **dadurch gekennzeichnet, dass** die erste Platte (5) zum Versperren auf der Seite des heißen Raumes (2) angeordnet ist und auf abdichtende Weise an den peripherischen Rahmen (4) befestigt ist und dass sie eine zweite Metallplatte (6) zum Versperren umfasst, die an einer zweiten Seite (23) des genannten peripherischen Rahmens (4) auf der Seite des kalten Raumes (3), parallel zur ersten Platte (5) befestigt ist, wobei die zweite Platte (5) durch demontierbare Befestigungsmittel am peripherischen Rahmen (4) befestigt ist, wobei der peripherische Rahmen (4) zwischen die zwei Platten (5, 6) zum Versperren derartig eingeschoben ist, dass ein freies Volumen (7) zwischen diesen beiden Platten (5, 6) geschaffen wird.

2. Feuerwehrende Trennwand (1) nach Anspruch 1, **dadurch gekennzeichnet, dass** sie keinerlei Durchführung an der ersten (5) und zweiten (6) Platte zum Versperren umfasst.

3. Feuerwehrende Trennwand (1) nach Anspruch 1 oder 2, **dadurch gekennzeichnet, dass** in dem freien Volumen (7) zwischen den beiden Platten (5, 6) zum Versperren ein Teilvakuum aufgebaut wird.

4. Feuerwehrende Trennwand (1) nach einem der Ansprüche 1 bis 3, **dadurch gekennzeichnet, dass** der peripherische Rahmen (4) aus Aluminium besteht und eine Dicke von ungefähr 16 mm aufweist.

5. Feuerwehrende Trennwand (1) nach irgendeinem der Ansprüche 1 bis 4, **dadurch gekennzeichnet, dass** die erste Platte (5) zum Versperren aus Aluminium besteht.

6. Feuerwehrende Trennwand (1) nach Anspruch 5, **dadurch gekennzeichnet, dass** die erste Platte (5) am peripherischen Rahmen (4) angeschweißt ist.

7. Feuerwehrende Trennwand (1) nach irgendeinem der Ansprüche 1 bis 6, **dadurch gekennzeichnet, dass** die erste Platte (5) zum Versperren eine Dicke von ungefähr 8 mm aufweist.

8. Feuerwehrende Trennwand (1) nach irgendeinem der Ansprüche 1 bis 7, **dadurch gekennzeichnet, dass** die zweite Platte (6) zum Versperren aus Aluminium oder aus Stahl besteht.

9. Feuerwehrende Trennwand (1) nach Anspruch 8, **dadurch gekennzeichnet, dass** die zweite Platte (6) zum Versperren eine Dicke von weniger als ungefähr 10 mm aufweist.

10. Feuerwehrende Trennwand (1) nach irgendeinem der Ansprüche 1 bis 9, **dadurch gekennzeichnet, dass** sie ein akustisches Absorptionsmittel (8) umfasst, das zwischen den beiden Platten (5, 6) angeordnet ist.

11. Feuerwehrende Trennwand (1) nach Anspruch 10, **dadurch gekennzeichnet, dass** das akustische Absorptionsmittel (8) aus einem porösen Material gebildet wird.

12. Feuerwehrende Trennwand (1) nach Anspruch 10 oder 11, **dadurch gekennzeichnet, dass** das akustische Absorptionsmittel (8) eine thermische Leitfähigkeit von kleiner als 0,034 W/(m.°K) und eine Dicke von größer als ungefähr 10 mm aufweist.

13. Feuerwehrende Trennwand (1) nach irgendeinem der Ansprüche 10 bis 12, **dadurch gekennzeichnet, dass** das akustische Absorptionsmittel (8) aus Steinwolle besteht.

14. Feuerwehrende Trennwand (1) nach irgendeinem der Ansprüche 1 bis 13, **dadurch gekennzeichnet, dass** die erste Platte (5) zum Versperren an ihrer inneren Fläche (11) gegenüber der zweiten Platte (6) zum Versperren mit einem ersten dämpfenden Mittel (9) überzogen ist.

15. Feuerwehrende Trennwand (1) nach Anspruch 14, **dadurch gekennzeichnet, dass** das erste dämpfende Mittel (9) eine Schicht (14) aus Aralditkleber und eine erste Scherplatte (15) umfasst, wobei die genannte Kleberschicht (14) sich zwischen die erste Scherplatte (15) und die erste Platte (5) zum Versperren einschiebt.

16. Feuerwehrende Trennwand (1) nach Anspruch 15, **dadurch gekennzeichnet, dass** die Schicht (14) aus Aralditkleber eine Dicke von ungefähr 1 mm aufweist und dass die erste Scherplatte (15) aus Stahl besteht und eine Dicke von ungefähr 2 mm aufweist.

17. Feuerwehrende Trennwand (1) nach irgendeinem der Ansprüche 1 bis 16, **dadurch gekennzeichnet, dass** die zweite Platte (6) zum Versperren an ihrer inneren Fläche (12) gegenüber der ersten Platte (5) zum Versperren mit einem zweiten dämpfenden Mittel (10) überzogen ist.

18. Feuerwehrende Trennwand (1) nach Anspruch 17, **dadurch gekennzeichnet, dass** das zweite dämpfende Mittel (10) eine Elastomerschicht (16) und eine zweite Scherplatte (17) umfasst, wobei die genannte Elastomerschicht (16) sich zwischen die zweite Scherplatte (17) und die zweie Platte (6) zum Versperren einschiebt.

19. Feuerwehrende Trennwand (1) nach Anspruch 18, **dadurch gekennzeichnet, dass** die Elastomerschicht (16) eine Dicke von ungefähr 1 mm aufweist und dass die zweite Scherplatte (17) aus Stahl besteht und eine Dicke von ungefähr 1 mm aufweist.

20. Feuerwehrende Trennwand (1) nach irgendeinem der vorstehenden Ansprüche, **dadurch gekennzeichnet, dass** sie eine Schicht von Luft (18) oder von Vakuum (18) von wenigstens 1 mm Dicke zwischen dem akustischen Absorptionsmittel (8) und dem ersten dämpfenden Mittel (9) oder zwischen dem akustischen Absorptionsmittel (8) und dem zweiten dämpfenden Mittel (10) umfasst.
